# EUROPEAN PATENT SPECIFICATION

(11) **EP 1 911 997 B1**
(45) Date of publication and mention of the grant of the patent: **20.11.2013**
(21) Application number: 07254015.6
(22) Date of filing: 10.10.2007
(51) Int. Cl.: F16H 63/42

(54) **Automobile gearshift indication apparatus**
Kraftfahrzeuggangschaltungsanzeigevorrichtung
Appareil d'indication de changement de vitesse sur véhicule automobile

(30) Priority: 13.10.2006 JP 2006279844
(43) Date of publication of application: 16.04.2008
(73) Proprietor: TOYOTA JIDOSHA KABUSHIKI KAISHA, Toyota-shi, Aichi-ken, 471-8571 (JP)
(72) Inventor: Kinoshita, Tomonori c/o Toyota Jidosha K.K., Toyota-shi, Aichi-ken 471-8571 (JP)
(74) Representative: Albutt, Anthony John

(56) References cited:
- JP-A- 59 062 752
- JP-A- 63 093 631
- US-A- 4 683 455
- US-A- 4 853 673

## Description

### TECHNICAL FIELD

The present invention relates to a gearshift indication apparatus that performs gearshift indication to a driver to instruct the driver to shift to a gear appropriate to a running state in an automobile equipped with a manual transmission. More specifically, the present invention relates to improvement of a gearshift indication apparatus configured so as to perform gearshift indication delay control in order to avoid bothering a driver by frequently producing a gearshift indication (for example, illumination of an indicator lamp) during a short period of time.

### BACKGROUND ART

Conventionally, in order for an automobile to obtain a necessary running torque or vehicle speed, engine (internal combustion engine) output is shifted with a transmission and transmitted to the wheels of the vehicle, and an optimum gear for the running state is generally determined according to the vehicle speed, engine load (for example, the accelerator opening degree), or the like. For example, in an automobile equipped with an automatic transmission, a gearshift map having gearshift lines (gear switch lines) for obtaining an optimum gear for the vehicle speed and the accelerator opening degree is stored in a controller, and a gear switching operation is automatically performed according to the gearshift map.

However, in an automobile equipped with a manual transmission, because the driver sets the gear as desired, there are large differences between individual people with respect to selection of the gear and the timing of the shift operation, so there is a high possibility that the automobile is running with the gear set to a different gear than the optimum gear. For example, in an operation to increase the gear (an upshift operation), when the gear is set to a lower gear (low gear side) than the optimum gear, worsened fuel efficiency results, and conversely, when the gear is set to a higher gear (high gear side) than the optimum gear, adequate acceleration performance is not obtained.

In order to address such problems, for example, JP 2003-19912A and JP H05-180339A disclose a gearshift indication apparatus that, when a different gear is set than an optimum gear obtained from the engine load, vehicle speed, or the like, indicates to the driver that a gearshift operation to the optimum gear should be performed.

Specifically, a gearshift map approximately the same as the gearshift map in the automatic transmission described above is stored in a controller, and when the gear set by the driver is different from the optimum gear obtained from the running state, the gearshift indication apparatus visually indicates to the driver that an upshift or a downshift should be performed according to the gearshift map. For example, a display portion for prompting an upshift or a downshift of the transmission is provided in a combination meter inside the vehicle cabin, and shift change advice is performed by illuminating the display portion according to the running state. This sort of gearshift indication apparatus is not limited to the above manual transmission, and is applicable also in an automobile provided with an automatic transmission having a manual gearshift function (a transmission capable of so-called sequential shifting).

However, when this sort of gearshift apparatus is provided, there is a possibility that the gearshift indication will be frequently produced during a short time period, and in this state the gearshift operation is bothersome to the driver. These sorts of circumstances notably occur when, for example, accelerating in a state with the accelerator opened a small amount after the automobile begins moving, or when running the automobile on a downward sloping street after the automobile begins moving, or the like.

In view of these points, it has been proposed to provide a delay timer that starts a count after establishment of a condition for execution of a gearshift indication up to then, i.e., after it has been judged that a gearshift operation is necessary in order to obtain an optimum gear according to the above gearshift map, and to perform gearshift indication delay control such that an actual gearshift indication is executed after a time period counted by this delay timer has elapsed. With this configuration, it is possible to avoid a circumstance in which the driver performs a gearshift operation according to a gearshift indication and then immediately afterward a subsequent gearshift indication is displayed, and thus the driver is not bothered.

However, when performing the gearshift indication delay control described above, there are problems as stated below.

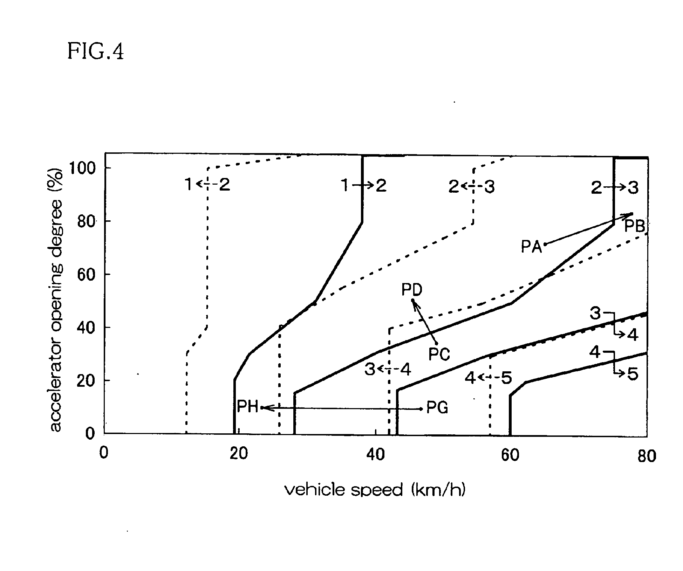

In the above gearshift map for gearshift indication performed by the above gearshift indication apparatus, for example, a plurality of gearshift lines are plotted as shown in FIG 4, and with these gearshift lines, in a circumstance in which the accelerator is open to a small degree, the gear is increased even when the vehicle speed is comparatively low. When the accelerator is open to a small degree, it is possible to determine that the driver is not demanding fast acceleration, and so the gear is increased in this case in order to achieve an improvement in fuel efficiency by using a high gear. Therefore, in a region of the gearshift map in which the accelerator is open to a small degree, there is a small gap between each of the gearshift lines (the gearshift lines are closely spaced).

On the other hand, when the accelerator is open to a large degree, a low gear is maintained without switching until the vehicle speed becomes comparatively high. When the accelerator is open to a large degree, it is possible to determine that the driver is demanding fast acceleration, and so the demand for fast acceleration is met by maintaining a low gear. Therefore, in a region of the gearshift map in which the accelerator is open to a large degree, there is a large gap between each of the gearshift lines (the gearshift lines are widely spaced).

When the above gearshift indication delay control is performed for a gearshift indication apparatus that performs gearshift indication according to a gearshift map in this manner, it is possible to avoid frequently producing a gearshift indication as described above in a circumstance in which the accelerator is open to a small degree, and so the driver is not bothered.

However, in a circumstance in which the accelerator is open to a large degree, there is a possibility that a delay in the upshift indication will be caused by the gearshift indication delay control and thus a low gear will be maintained more than is necessary, and there is a risk that the delay in the upshift operation will be accompanied by the number of engine revolutions increasing to more than is necessary. Such a circumstance invites worsened fuel efficiency, and adversely affects engine longevity.

The present invention was made in consideration of the foregoing points, and it is an object thereof to provide, for an automobile gearshift indication apparatus that performs the above gearshift indication delay control, a configuration in which a gearshift indication is provided to the driver at a timing appropriate to the size of the engine load, the engine load being represented by the accelerator opening degree.

Japanese Patent Application JP 59 062752, which discloses an apparatus according to the preamble of claim 1, relates to a shift indicator for a car equipped with a manually operated speed change gear.

Japanese Patent Application JP 63 093631 relates to a speed change timing instruction device for an automobile.

### SUMMARY

Aspects of the invention are set out in the accompanying claims.

The present invention provides an automobile gearshift indication apparatus that is used in an automobile equipped with a transmission capable of manual operation, and when a gearshift indication condition has been established in which an optimum gear of the transmission desired according to a driving state of the automobile is different from a gear selected by a driver, performs a gearshift indication to the driver so as to prompt the driver to shift to the optimum gear, the automobile gearshift indication apparatus being provided with: an engine load detection means that detects an engine load; a gearshift indication delaying means that, after the gearshift indication condition has been established, delays the gearshift indication to the driver for a predetermined time; and a delay time changing means that receives an output of the engine load detection means, and changes the delay time by the gearshift indication delaying means according to the size of the engine load.

With the above configuration, because the driver feels bothered when a gearshift indication is displayed immediately after establishment of a gearshift indication condition, with the gearshift indication delaying means, a gearshift indication is not performed immediately after establishment of a gearshift indication condition; a gearshift indication is displayed to the driver after delaying for a predetermined time. This is particularly effective in a circumstance in which the accelerator opening degree (engine load) is comparatively low. That is, from the conventional technology, the gear map is set such that even in a circumstance in which the accelerator opening degree is low, the gear is increased (the gap between gearshift lines is narrowly set). When the accelerator is open to a small degree, it is possible to determine that the driver is not demanding fast acceleration, and so the gear is increased in the above manner in order to achieve an improvement in fuel efficiency by using a high gear. However, in this case there is a possibility that the increase in vehicle speed is accompanied by gearshift indication conditions being consecutively established within a short period of time. With the present invention, by performing delay control in such a case with the gearshift indication delaying means, it is possible to suppress frequently producing a gearshift indication, and so bothering of the driver is prevented.

However, even in a state in which the accelerator opening degree (engine load) is comparatively large, there is a possibility that a low gear will be maintained more than is necessary by delaying the start of the gearshift indication for the same time as in the above case of a low accelerator opening degree, with the delay in the upshift operation causing the number of engine revolutions to increase more than is necessary. Therefore, in the present invention, by setting a shorter delay time by the gearshift indication delaying means for a larger engine load, in the case of an upshift it is possible to perform a gearshift indication to the driver before the number of engine revolutions rises too much.

In the above configuration, the automobile gearshift indication apparatus is provided with a lamp off timer that starts a count when the driver has performed a gearshift operation according to the gearshift indication and thus the gearshift indication has been released; and a gearshift indication permission timer that starts a count with establishment of a gearshift indication condition and elapsing of time counted by the lamp off timer as an AND condition, in which gearshift indication to the driver is performed when the time counted by the gearshift indication permission timer has elapsed. Also, the delay time changing means sets a time from when the gearshift indication permission timer starts the count to when the time counted by the gearshift indication permission timer elapses to a shorter time for a larger engine load.

With this configuration, because the gearshift indication permission timer starts the count after waiting for the time counted by the gearshift indication permission timer to elapse, it is possible to insure an adequate time until the next gearshift indication will be performed after the driver has performed a gearshift operation to release the gearshift indication (turning off lamps or the like), and so it is possible to reliably prevent the above bothering of the driver. Afterward, due to a gearshift indication being performed after passage of a delay time according to the engine load, in the case of an upshift it is possible to perform a gearshift indication to the driver before the number of engine revolutions rises too much.

Also, in the above configuration, the engine load detection means may obtain the engine load from the accelerator opening degree of the automobile. Also, in the above configuration, the engine load detection means may obtain the engine load from the degree of automobile acceleration.

In the foregoing configurations, the delay time by the gearshift indication delaying means is set to a shorter time for a larger accelerator opening degree. In a circumstance in which the accelerator opening degree is large, because the rate of increase in the number of engine revolutions is fast, a delay in an upshift operation is accompanied by a circumstance in which the number of engine revolutions is likely to increase too much in a short period of time, but in the present invention, by shortening the delay time as described above a delay in an upshift operation is prevented, and thus it is possible to suppress an excessive increase in the number of engine revolutions. Also, the accelerator opening degree is correlated with the degree of automobile acceleration, so ordinarily, the degree of automobile acceleration is greater for a larger accelerator opening degree. Therefore, with the latter configuration, for example, the degree of automobile acceleration is detected by an acceleration sensor (G sensor) or the like installed to the vehicle body, and by obtaining the engine load based on that detection signal, the delay time by the above gearshift indication delaying means is set.

With an embodiment of the present invention, the delay time in gearshift indication delay control is changed for the gearshift indication apparatus that performs gearshift indication delay control, according to the engine load such as the accelerator opening degree. Thus, with the gearshift indication delay control performed when the engine load is low, it is possible to eliminate bothering of the driver. Also, it is possible to prevent an excessive increase in the number of engine revolutions when the engine load is high. As a result, it is possible to achieve an improvement in fuel efficiency, and also possible to eliminate an adverse effect on engine longevity.

### BRIEF DESCRIPTION OF THE DRAWINGS

FIG. 1 is a side view of an automobile according to an embodiment of the present invention.
FIG 2 is a front view showing an enlarged view of a combination meter in an embodiment of the present invention.
FIG 3 shows the overall configuration of a control apparatus in an embodiment of the present invention.
FIG 4 shows a gearshift map in an embodiment of the present invention.
FIG 5A shows an illumination state of an upshift lamp, and a display state of a display when an upshift is performed, in an embodiment of the present invention. FIG 5B shows an illumination state of a downshift lamp, and a display state of a display when an downshift is performed, in an embodiment of the present invention.
FIG 6 is a flowchart that shows an operating procedure for gearshift indication control in an embodiment of the present invention.
FIG 7 is a timing chart for comparing conventional gearshift indication control with gearshift indication control in an embodiment of the present invention.

### REFERENCE NUMERALS

- 1: engine (internal combustion engine)
- 2: manual transmission
- 4: control apparatus

### DESCRIPTION

Hereinafter, embodiments of the present invention will be described, by way of example, with reference to the accompanying drawings. The present embodiment illustrates a case in which the present invention is applied in an automobile provided with a manual transmission.

### Automobile and Gearshift Indication Apparatus

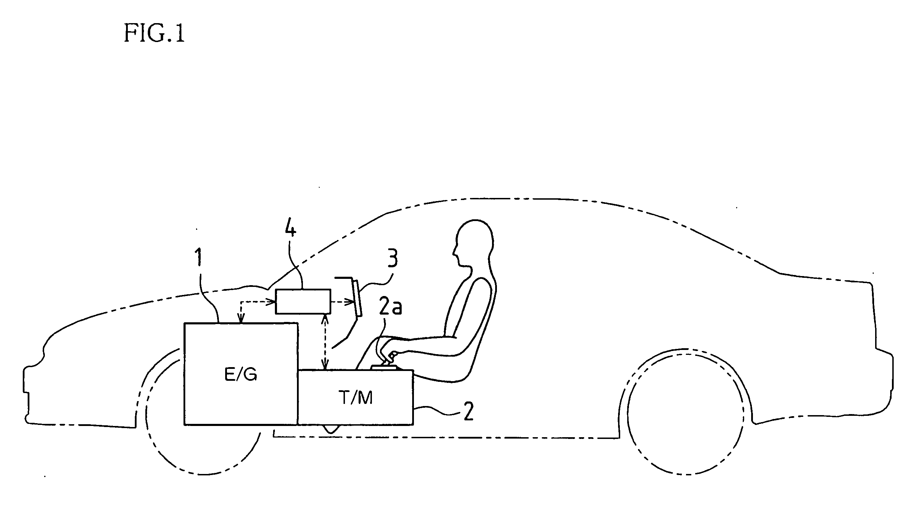

FIG 1 is a side view of an automobile that shows the arrangement layout of an engine (internal combustion engine) 1, a manual transmission 2, a combination meter 3, and a control apparatus 4, with the vehicle body indicated by imaginary lines.

The manual transmission 2, for example, includes five gears, and has a shift knob 2a for manually performing a gearshift operation disposed protruding inside the vehicle cabin.

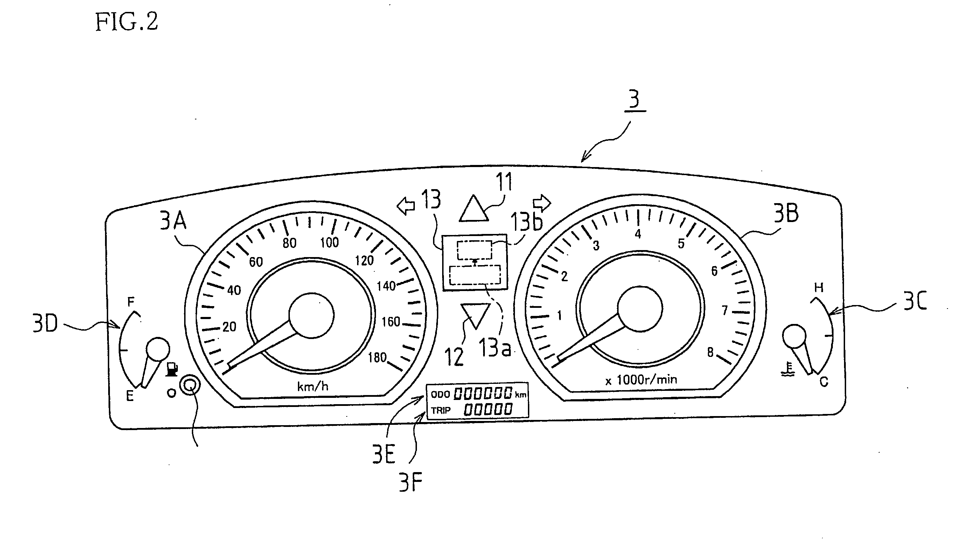

The combination meter 3 is installed in a dashboard to the front of a driver seat inside the vehicle cabin, and as shown for example in FIG 2, is provided with a speedometer 3A, a tachometer 3B, a water temperature gauge 3C, a fuel gauge 3D, an odometer 3E, a trip meter 3F, and the like, and various warning indicator lamps (not shown) and the like.

In the present embodiment, a gearshift indication apparatus is provided that indicates an appropriate gear position selection of the manual transmission 2 for achieving improved fuel efficiency according to the running state of the automobile. Following is a description of this gearshift indication apparatus.

First, the combination meter 3 is provided with, as display portions for gearshift indication, an upshift lamp 11 that illuminates when the gear position of the manual transmission 2 needs to be shifted up and a downshift lamp 12 that illuminates when the gear position needs to be shifted down, and a display 13 where various information in the form of numerals, characters, or the like is displayed. A display with a liquid crystal or seven-segment configuration is used as the display 13.

Each of the above lamps 11 and 12 are configured, for example, with an LED or the like, and are illuminated as necessary. The lamps 11 and 12 can be configured so as to blink, and can be configured so that light of a single color is emitted, or can be configured to emit two or more colors by embedding light emitters of two or more types, with each emitted light color having a meaning. Further, sounds, voices, or the like for gearshift indication can be adopted instead of the lamps 11 and 12.

Also, the display 13 is, for example, provided with a present gear position display portion 13a, and a target gear position display portion 13b. The present gear position display portion 13a displays the present gear position of the manual transmission 2 with a numeral or symbol, and the target gear position display portion 13b displays the gear position to which a gearshift is indicated (gear position to which the driver should shift; hereinafter referred to as the target gear position) with a numeral or symbol. For example, the present gear position display in the present gear position display portion 13a is displayed without blinking, and the target gear position display in the target gear position display portion 13b is displayed in a blinking manner.

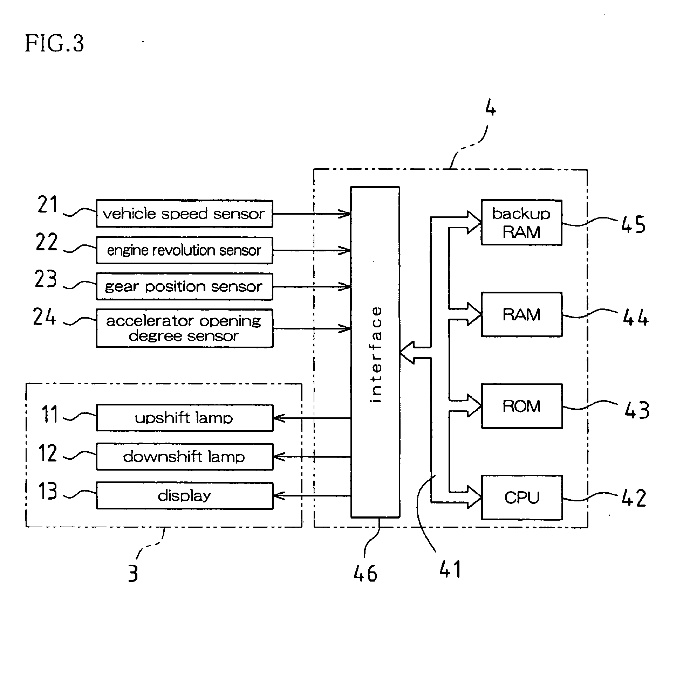

The control apparatus 4 is ordinarily configured from a commonly known ECU (Electronic Control Unit), and for example, as shown in FIG 3, is provided with a CPU (Central Processing Unit) 42, a ROM (Read Only Memory) 43, a RAM (Random Access Memory) 44, a backup RAM 45, an interface 46, and the like which are connected to each another by a bidirectional bus 41.

The CPU 42 perceives the running state of the vehicle based on output signals from various sensors (for example, a vehicle speed sensor 21, an engine revolution sensor 22, a gear position sensor 23, an accelerator opening degree sensor 24, or the like) that are input via the interface 46, and performs appropriate control as necessary.

Also, various programs, including at least a program for executing gearshift indication control that indicates an appropriate gear position selection of the manual transmission 2 for achieving improved fuel efficiency according to the running state of the automobile, or the like, are stored in the ROM 43, in addition to various programs for executing control related to basic driving of the automobile. The specific content of this gearshift indication control will be described below.

The RAM 44 is a memory in which results of computation by the CPU 42, data input from the various sensors, and the like, are temporarily stored, and the backup RAM 45 is a nonvolatile memory in which various data to be saved is stored.

Also, a gearshift map (FIG 4) is stored in the ROM 43. The gearshift map is a control map used for the above gearshift indication control, and has gearshift lines (gear switch lines) for obtaining an optimum gear for the vehicle speed and the accelerator opening degree. More specifically, an optimum gear suitable for the running state of the automobile is obtained according to this gearshift map, and when the obtained gear (target gear position) is different from the gear that the driver has set (present gear position), a gear indication operation is performed by the above lamps 11 and 12, and the target gear position display portion 13b of the display 13.

Following is a description of the above gearshift map. As shown by way of example in FIG. 4, a plurality of gearshift lines are plotted. In FIG 4, solid lines indicate gearshift lines used in an upshift operation that increases the gear, and broken lines indicate gearshift lines used in a downshift operation that decreases the gear. Also, the respective switching directions of upshifts and downshifts are indicated in FIG 4 using numerals and arrows.

As is clear from FIG 4, with the gearshift lines used in an upshift operation, in a circumstance in which the accelerator is open to a small degree, the gear is increased even when the vehicle speed is comparatively low. For example, the shift lines are set such that in a case in which an accelerator opening degree of 20% is maintained from the time that the automobile begins moving, when the vehicle speed becomes about 20 km/h, a switch from first gear to second gear is demanded, and afterward, when the vehicle speed becomes about 30 km/h, a switch from second gear to third gear is demanded, and when the vehicle speed becomes about 45 km/h, a switch from third gear to fourth gear is demanded. When the accelerator is open to a small degree, it is possible to determine that the driver is not demanding fast acceleration, and so the gear is increased in the above manner in order to achieve an improvement in fuel efficiency by using a high gear. Therefore, in a region of the gearshift map in which the accelerator is open to a small degree, there is a small gap between each of the gearshift lines (the gearshift lines are closely spaced).

On the other hand, when the accelerator is open to a large degree, the gear is not switched until the vehicle speed becomes comparatively high. For example, the shift lines are set such that in a case in which an accelerator opening degree of 80% is maintained from the time that the automobile begins moving, a switch from first gear to second gear is not demanded until the vehicle speed becomes about 38 km/h, and a switch from second gear to third gear is not demanded until the vehicle speed becomes about 75 km/h. When the accelerator is open to a large degree, it is possible to determine that the driver is demanding fast acceleration, and so the demand for fast acceleration is met by maintaining a low gear. Therefore, in a region of the gearshift map in which the accelerator is open to a large degree, there is a large gap between each of the gearshift lines (the gearshift lines are widely spaced).

Likewise, also with respect to the gearshift lines used in a downshift operation, in a region of the gearshift map in which the accelerator is open to a small degree, there is a small gap between each of the gearshift lines (the gearshift lines are closely spaced), and in a region of the gearshift map in which the accelerator is open to a large degree, there is a large gap between each of the gearshift lines (the gearshift lines are widely spaced).

In this manner, the gearshift indication apparatus is configured from the above upshift lamp 11 and downshift lamp 12 that serve as display portions for gearshift indication, the display 13, and the control apparatus 4.

### Basic Operation of Gearshift Indication

Following is a description of the basic operation of the gearshift indication by the gearshift indication apparatus configured in the manner described above.

The control apparatus 4 identifies the present gear position of the manual transmission 2 based on a detection signal from the gear position sensor 23, and displays the gear position in the form of a numeral in the present gear position display portion 13a of the display 13.

As gearshift indication control by the control apparatus 4, the running state of the automobile is perceived based on signals output from the vehicle speed sensor 21 and the accelerator opening degree sensor 24, a gear (optimum gear) for running in a manner that is desirable for achieving an improvement in fuel efficiency or the like is read out from the above gear map (FIG 4), and a judgment is performed of whether or not a gearshift operation is necessary.

When it is desirable to maintain a state in which gearshifting is not necessary (when the gear is appropriately set), the upshift lamp 11 and the downshift lamp 12 are both turned off, and the target gear position display portion 13b is placed in a non-displaying state.

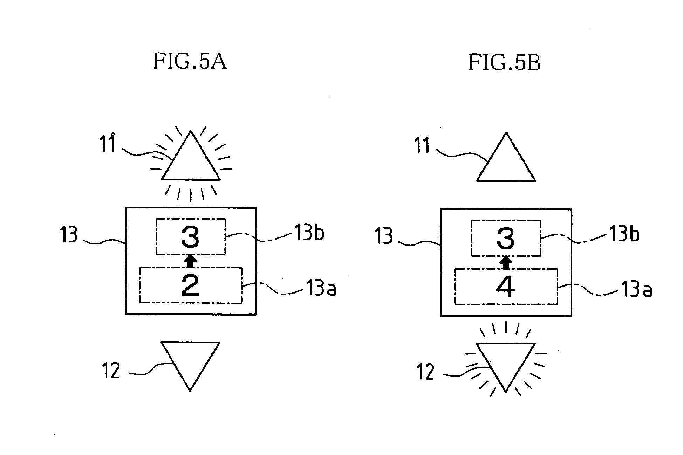

When it is desirable to change gears and an upshift is demanded, as shown in FIG 5A, the upshift lamp 11 is illuminated, and the target gear position is displayed in the target gear position display portion 13b. FIG 5A shows a state in which the present gear position is second gear, and the target gear position is third gear. For example, FIG 5A shows the display state when, in a state in which the automobile is running with the present gear position of the manual transmission 2 set to second gear, the driving state has changed from point PA to point PB in FIG 4.

On the other hand, when it is desirable to change gears and a downshift is demanded, as shown in FIG 5B, the downshift lamp 12 is illuminated, and the target gear position is displayed in the target gear position display portion 13b. FIG 5B shows a state in which the present gear position is fourth gear, and the target gear position is third gear. For example, FIG 5B shows the display state when, in a state in which the automobile is running with the present gear position of the manual transmission 2 set to fourth gear, the driving state has changed from point PC to point PD in FIG 4.

When the driver performs a gearshift operation to shift to the appropriate gear according to this indication, the above indication (illumination of the lamps 11 and 12, and display of the target gear position) is released. The illumination of the lamps 11 and 12, and display of the target gear position, may be performed continuously until the driver performs a gearshift operation to shift to the appropriate gear, or this display may be released when the display has been performed for a predetermined period of time but a gearshift operation has not been performed.

### Gearshift Indication Delay Control

In the gearshift indication apparatus according to the present embodiment, gearshift indication delay control (a delay operation by a gearshift indication delaying means) is performed that provides a predetermined interval of time between establishment of a condition for execution of gearshift indication (when the running state of the automobile crosses a gearshift line on the gearshift map) and actual execution of a gearshift indication to the driver. That is, a delay timer is provided that starts a count after it has been judged that a gearshift operation is necessary in order to obtain an optimum gear according to the gearshift map, and an actual gearshift indication (illumination of lamps and display of the target gear position) is executed after a time period counted by the delay timer has elapsed. With this configuration, it is possible to avoid a circumstance in which the driver performs a gearshift operation and then immediately afterward a subsequent gearshift indication is displayed, and thus the driver is not bothered.

More specifically, the gearshift indication apparatus in the present embodiment is provided with two types of timers: a lamp off timer and a gearshift indication permission timer. Following is a description of these timers.

The above lamp off timer is a delay timer that starts a count at the point in time that the above lamps 11 and 12 and the target gear position display portion 13b are turned off (the point in time when display is released according to gearshift operation by the driver). Illumination of the above lamps 11 and 12 and display by the target gear position display portion 13b are not performed before the time counted by the lamp off timer elapses, even if a gearshift indication condition has been established (even if due to the running state of the automobile crossing a gearshift line on the gearshift map, a state occurred in which the optimum gear obtained from the gearshift map is different than the gear actually selected by the driver). Thus, it is possible to avoid bothering the driver by frequently performing the gearshift indication operation. In the present embodiment, a timer value of the lamp off timer (time from when the count starts to when time counted by the lamp off timer elapses) is always a fixed value (for example, 1 second).

On the other hand, the gearshift indication permission timer is a delay timer that starts a count at the point in time that the above gearshift indication condition is established and the time counted by the above lamp off timer has elapsed (the point of time that an AND condition of these has been established). Due to elapsing of the time counted by the gearshift indication permission timer, a gearshift indication operation (illumination of the above lamps 11 and 12 and display by the target gear position display portion 13b) according to the gearshift indication condition are permitted.

The present embodiment is characterized in that a timer value of the gearshift indication permission timer (time from when the count starts to when time counted by the gearshift indication permission timer elapses) is changed according to the accelerator opening degree (delay time change operation by a delay time changing means).

Specifically, for a larger accelerator opening degree, the count value of the gearshift indication permission timer is set to a shorter value, and so the time from establishment of a gearshift indication execution condition to the time of actually executing the gearshift indication to the driver is set to a shorter value. For example, when the accelerator opening degree is less than 20%, the count value (the delay time) of the gearshift indication permission timer is set to 2 seconds, when the accelerator opening degree is 20% or more and less than 80%, the count value (the delay time) of the gearshift indication permission timer is set to 1.5 seconds, and when the accelerator opening degree is 80% or more the count value (the delay time) of the gearshift indication permission timer is set to 1 second.

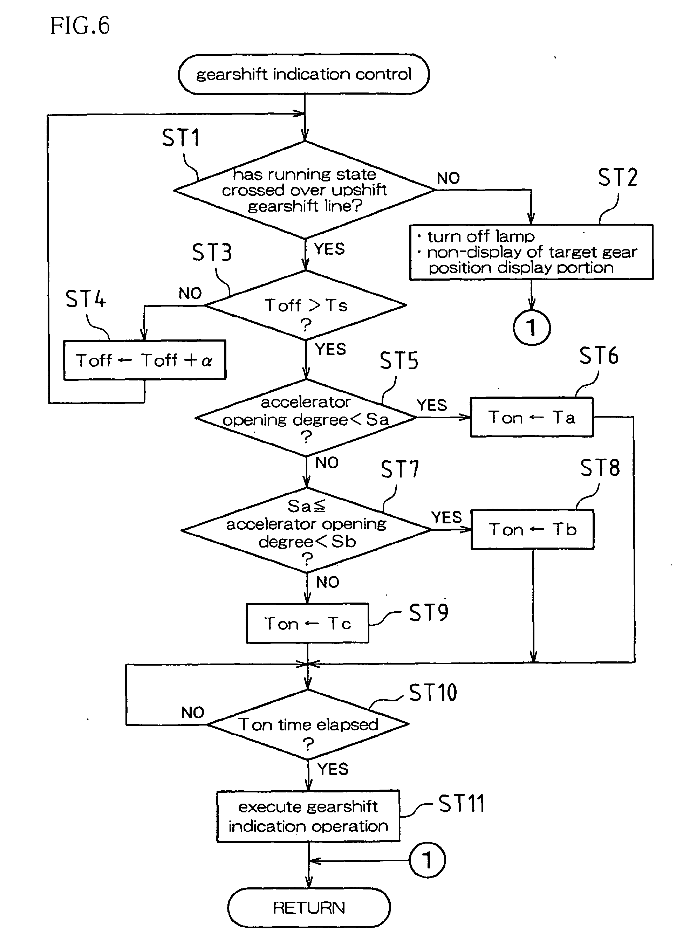

Following is a description of the operation procedure of gearshift indication control (gearshift indication control for an upshift) in the present embodiment, with reference to the flowchart shown in FIG 6. This routine shown in FIG 6 is, for example executed at each of a predetermined time after the engine starts, for example, every several milliseconds. Also, this routine may be executed at each instance of a predetermined crank angle.

First, in Step ST1, a determination is made of whether or not the running state of the automobile has crossed over an upshift gearshift line (the gearshift lines indicated by solid lines in the gearshift map in FIG 4) to the upshift side of the upshift gear line. When determined NO in Step ST1, the present running state of the automobile is deemed to be a state in which the present gear position is optimum (an appropriate gear is set), and in Step ST2, both of the lamps 11 and 12 are turned off and a target gear position is not displayed in the target gear position display portion 13b. Then the present routine ends.

On the other hand, when determined YES in above Step ST1, in Step ST3, a determination is made of whether or not a time Toff since turning off the above lamps 11 and 12 and the target gear position display portion 13b in the previous instance has exceeded a minimum lamp off time Ts. The time Toff is a time counted by the lamp off timer as described above, and corresponds to a delay time from when the above lamps 11 and 12 and the target gear position display portion 13b are turned off by a gearshift operation according to a prior gearshift indication to when it is possible to perform the next gearshift indication. Thus, it is possible to avoid a state in which a gearshift indication is frequently produced during a short period of time. That is, illumination of the above lamps 11 and 12 and display by the target gear position display portion 13b are not performed before the time counted by the lamp off timer elapses, even if a gearshift indication condition has been established (even if the running state of the automobile crossed over a gearshift line).

When determined NO in above Step ST3, a predetermined value (α) is added to the present count time (Toff), and the routine returns to Step ST1, using this as a new count time (Toff). The predetermined value (α) is a sum of the amount of time needed for detection of the present count time (Toff) and the amount of time needed for making the determination in above Step ST3.

When, in the determination of Step ST1, a state is being maintained in which the running state of the automobile has crossed over an upshift gearshift line, after completion of Step S4, the operations of Steps ST1, ST3, and ST4 are repeated, waiting for a YES determination in Step S3.

Because the lamp off timer as described above starts a count at the point in time that the above lamps 11 and 12 and the target gear position display portion 13b are turned off, it is possible that the time counted by the lamp off timer has already elapsed at the point in time that a gearshift indication condition is established (the point in time that a YES determination is made in Step ST1). In this case, after a YES determination has been made in Step ST1, the routine moves directly to the operations from Step ST5 onward.

On the other hand, when the running state of the automobile has crossed over an upshift gearshift line in the opposite direction (to the downshift side) and the gear upshift demand has been released before the time counted by the lamp off timer elapses (before a YES determination is made in Step ST3), the routine moves from Step ST1 to Step ST2.

When the time counted by the lamp off timer has elapsed with a state maintained in which the running state of the automobile has crossed over an upshift gearshift line to the upshift side, and a YES determination has been made in Step ST3, the routine moves to Step ST5, and the accelerator opening degree is detected based on a detection signal from the accelerator opening degree sensor 24 (an engine load detection operation by an engine load detection means). Then, a determination is made of whether or not that accelerator opening degree is less than a predetermined detection value Sa (for example, 20%). When this determination is YES, the routine moves to Step ST6, a determination is made that the accelerator opening degree is low, and the count value (Ton) of the above gearshift indication permission timer is set to a time Ta (for example, 2 seconds)(a time that is longer than times Tb and Tc described below). That is, a long time is set for the count value (Ton) of the above gearshift indication permission timer, which sets the time from when the gearshift indication condition is established and the time counted by the above lamp off timer has elapsed, to when actual execution of a gearshift indication to the driver is permitted.

On the other hand, when a NO determination has been made in Step ST5, the routine moves to Step ST7, and a determination is made of whether or not the accelerator opening degree is equal to or greater than the predetermined detection value Sa (for example, 20%), and less than a predetermined value Sb (for example, 80%). When this determination is YES, the routine moves to Step ST8, a determination is made that the accelerator opening degree is moderate, and the count value (Ton) of the above gearshift indication permission timer is set to a time Tb that is slightly shorter than the above Ta (for example, 1.5 seconds; a time that is slightly longer than time Tc described below). That is, a shorter time is set for the count value (Ton) of the above gearshift indication permission timer, which sets the time from when the gearshift indication condition is established and the time counted by the above lamp off timer has elapsed, to when actual execution of a gearshift indication to the driver is permitted, than in the above case in which the accelerator opening degree is low.

When a NO determination has been made in Step ST7, a determination is made that the accelerator opening degree is equal to or greater than the predetermined detection value Sb (for example, 80%), and so the accelerator opening degree is high, and therefore the count value (Ton) of the above gearshift indication permission timer is set to a time that is still shorter than the above Tb (for example, 1 second). That is, a still shorter time Tc is set for the count value (Ton) of the above gearshift indication permission timer, which sets the time from when the gearshift indication condition is established and the time counted by the above lamp off timer has elapsed, to when actual execution of a gearshift indication to the driver is permitted, than in the cases above.

After the count value (Ton) of the gearshift indication permission timer has been set according to the accelerator opening degree in the above manner, the count of the gearshift indication permission timer is started, and in Step ST10, a determination is made of whether or not the time counted by the gearshift indication permission timer has elapsed. In this case, the time until the time counted by the gearshift indication permission timer has elapsed is shorter for a higher accelerator opening degree, a YES determination is made in Step ST10, and a gearshift indication operation of Step ST11 is executed early. More specifically, illumination of the upshift lamp 11 and display of the target gear position with the target gear position display portion 13b of the display 13 based on the gearshift map are performed early.

In this manner, a gearshift indication to the driver is performed, and when a gearshift operation according to that gearshift indication is performed, the upshift lamp 11 is turned off, and the target gear position portion 13b is placed in a non-displaying state. By performing an operation as described above, a running state of the automobile is obtained in which an appropriate gear has been set.

As described above, in the present embodiment, because the delay time from when a gearshift indication condition is established to when a gearshift indication is executed is set shorter for a higher accelerator opening degree, it is possible to perform a gearshift indication to the driver before the number of engine revolutions rises too much. Therefore, without changing the gearshift lines of the gearshift map (without performing a design change from conventional gearshift lines), it is possible to avoid worsening fuel efficiency and adversely affecting engine longevity, which result from an excessive increase in the number of engine revolutions.

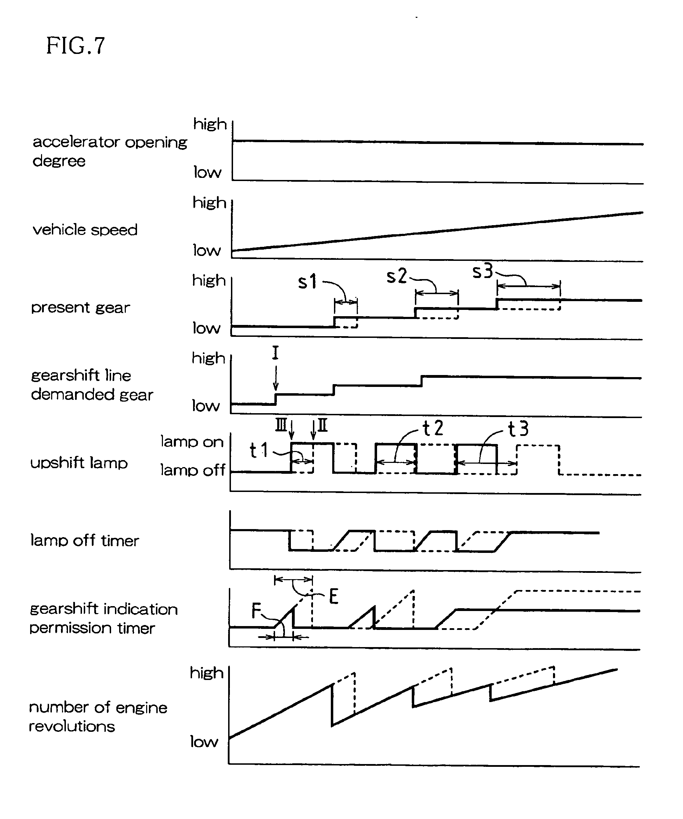

FIG 7 is a timing chart that shows changes in the accelerator opening degree, vehicle speed, present gear (shift position set by driver operation), gearshift line demanded gear (gear demanded according to the gearshift map; the optimum gear), upshift lamp illumination state, lamp off timer, gearshift indication permission timer, and number of engine revolutions. The broken lines show states of change according to the conventional technology, and the solid lines show states of change according to the present embodiment.

In FIG. 7, after establishment of a gearshift indication condition (time I in FIG 7), with the conventional technology the time counted by the gearshift indication permission timer elapses after delaying for a delay time E, and at time II in FIG 7, gearshift indication is performed by illumination of the upshift lamp 11 or the like. On the other hand, according to the present embodiment, after establishment of a gearshift indication condition (time I), the time counted by the gearshift indication permission timer elapses after delaying for a delay time F (<time E), and at time III in FIG 7, gearshift indication is performed by illumination of the upshift lamp 11 or the like. The same is true also at other times of establishment of a gearshift indication condition; according to the present embodiment, gearshift indication is performed earlier than with the conventional technology.

In this manner, according to the conventional technology (broken lines), in a circumstance in which the accelerator opening degree is high, a delay in the upshift indication (with the conventional technology, the upshift indications are delayed by t1, t2, and t3 respectively for each of the upshift timings in FIG 7) results in the number of engine revolutions becoming more than necessary (refer to the number of engine revolutions indicated by broken lines in FIG 7), and so in this circumstance there is a risk of worsening fuel efficiency and adversely affecting engine longevity.

On the other hand, according to the present embodiment, in a circumstance in which the accelerator opening degree is high, because the upshift indication is performed quickly (upshift indications are performed at earlier times than with the above conventional delays by t1, t2, and t3, and thus the gearshift operation of the driver also is performed s1, s2, and s3 earlier than with the conventional technology), the number of engine revolutions does not rise too much (refer to the number of engine revolutions indicated by solid lines in FIG 7), and therefore, an improvement in fuel efficiency is achieved, and the above adverse effect on engine longevity is eliminated.

### Modified Example 1

In the above embodiment, the operation procedure of gearshift indication control for an upshift was described as gearshift indication control, but likewise in the case of a downshift, a configuration may be adopted in which the count value (Ton) of the gearshift indication permission timer is changed according to the accelerator opening degree.

In this case as well, as in the case of the above embodiment, for a larger accelerator opening degree, the count value of the gearshift indication permission timer is set to a shorter value, and so the time from establishment of a gearshift indication execution condition to the time of actually executing the gearshift indication (downshift indication) to the driver is set to a shorter value.

With this sort of operation procedure of gearshift indication control for a downshift, when the driver quickly increases the accelerator opening degree to demand fast acceleration, so that a downshift has become necessary, it is possible to perform a downshift indication within a short period of time, and so the driver can quickly set a gear that is suitable for quick acceleration by performing a gearshift operation according to the downshift indication.

On the other hand, in a circumstance in which vehicle speed drops while the accelerator opening degree remains small, the gear is downshifted according to the gearshift map, but in this case the count value (Ton) of the gearshift indication permission timer is set to a large value. That is, gearshift indication is performed with a long delay time. Thus, it is conceivable that the driving state of the automobile will cross over two gearshift lines to the downshift side during the delay time (such as a case in which the driving state changes from point PG to point PH in FIG 4), and so it is also possible that after the delay time ends, a display is executed in the target gear position display portion 13b that prompts the driver to perform a gearshift operation to a gear that is two gears lower than the present gear. That is, when the driver performs a downshift operation according to the gearshift indication apparatus, it is possible to not perform a bothersome operation of decreasing gears one by one, and instead decrease by two gears at once; as a result operability of the downshifting operation is good.

### Modified Example 2

In the above embodiments, the count value (Ton) of the gearshift indication permission timer was changed according to the accelerator opening degree. In Modified Example 2, instead, a configuration may be adopted in which a larger count value (Ton) of the gearshift indication permission timer is set for a higher degree of vehicle acceleration detected by an acceleration sensor (G sensor) installed to the vehicle body.

The accelerator opening degree is correlated with the degree of automobile acceleration. When the accelerator opening degree is large, an increase in the amount of air intake into a combustion chamber of the engine results in increased engine output, and thus the degree of automobile acceleration is increased; therefore the accelerator opening degree can be estimated from the value detected by the acceleration sensor.

### Other Embodiments

The above embodiments and modified examples illustrated a case in which the present invention is applied in an automobile provided with the manual transmission 2. The present invention is not limited to such a configuration; for example, the present invention is applicable also in an automobile provided with an automatic transmission having a manual gearshift function. Automatic transmissions having a manual gearshift function have become widespread, and an example of such a transmission is a so-called sequential shift transmission in which upshifts and downshifts are performed by an operation of pushing forward and an operation of pushing backward.

Also, in the above embodiments and modified examples, a case was illustrated in which the lamps 11 and 12 and the display 13 are installed in the combination meter 3 as display portions for gearshift indication, but their installation positions are not particularly limited. For example, the lamps 11 and 12 and the display 13 can be installed not in the combination meter 3, but in the vicinity of the combination meter 3, and in addition, the lamps 11 and 12 and the display 13 can perform display using a commonly known navigation system, or using a heads-up display system that projects information onto a windshield.

Also, the count value of the gearshift indication permission timer (in the above embodiments, 2 sec., 1.5 sec., 1 sec.) and the value of the accelerator opening degree for determining the count value (in the above embodiments, 20%, 80%) are not limited to the values stated above, and can be set as desired. Also, the gearshift lines of the gearshift map are not limited to those shown in FIG 4, and can be set as desired.

Also, in the above embodiments and modified examples, a configuration was adopted in which a smaller value was set for the count value of the gearshift indication permission timer (a shorter delay time was set) in the case of a greater engine load such as the accelerator opening degree, but the technical idea of the present invention also encompasses, according to the circumstances, setting a larger value for the count value of the gearshift indication permission timer in the case of a greater engine load (setting a longer delay time). For example, in a circumstance in which the accelerator opening degree is high, there is a possibility that a driving operation (accelerator work) will be performed such that the accelerator opening degree changes greatly, and in this case, for a larger accelerator opening degree, when the count value of the gearshift indication permission timer is set to a larger value, even if the change in the accelerator opening degree is great, a hunting phenomenon in which downshift indication is repeatedly performed from moment to moment is eliminated. This sort of setting of the count value of the gearshift indication permission timer (for a larger engine load, setting of a smaller value for the count value of the gearshift indication permission timer, or conversely, setting of a larger value for the count value of the gearshift indication permission timer) is appropriately selected according to a form of indication by the gearshift indication apparatus preferred by the driver, the running performance demanded by the automobile, or the like.

The present invention may be embodied in various other forms without departing from the scope of the invention or essential characteristics thereof as defined in the claims. The embodiments disclosed in this application are to be considered in all respects as illustrative and not limiting. The scope of the invention is indicated by the appended claims rather than by the foregoing description, and all modifications or changes that come within the meaning and range of equivalency of the claims are intended to be embraced therein.

This application claims priority based on Japanese Patent Application No. 2006-279844 filed in Japan on October 13, 2006.

## Claims

1. An automobile gearshift indication apparatus that is used in an automobile equipped with a transmission capable of manual operation, and when a gearshift indication condition has been established in which an optimum gear of the transmission desired according to a driving state of the automobile is different from a gear selected by a driver, performs a gearshift indication to the driver so as to prompt the driver to shift to the optimum gear, the automobile gearshift indication apparatus comprising:
an engine load detection means that detects an engine load;
a gearshift indication delaying means that, after the gearshift indication condition has been established, delays the gearshift indication to the driver for a predetermined time;
a delay time changing means that receives an output of the engine load detection means, and changes the delay time by the gearshift indication delaying means according to the size of the engine load;
**characterized by**
a lamp off timer that starts a count when the driver has performed a gearshift operation according to the gearshift indication and thus the gearshift indication has been released; and
a gearshift indication permission timer that starts a count with establishment of a gearshift indication condition and elapsing of time counted by the lamp off timer as an AND condition, wherein gearshift indication to the driver is performed when the time counted by the gearshift indication permission timer has elapsed,
wherein the delay time changing means sets a time from when the gearshift indication permission timer starts the count to when the time counted by the gearshift indication permission timer elapses to a shorter time for a larger engine load.

2. The automobile gearshift indication apparatus according to claim 1.
wherein the engine load detection means obtains the engine load from an accelerator opening degree of the automobile.

3. The automobile gearshift indication apparatus according to claim 1,
wherein the engine load detection means obtains the engine load from the degree of automobile acceleration.

## Patentansprüche

1. Kraftfahrzeuggangschaltungsanzeigevorrichtung, die in einem Kraftfahrzeug verwendet wird, das mit einem Übersetzungskabel einer manuellen Bedienung ausgestattet ist, und, wenn eine Gangschaltungsanzeigebedingung hergestellt worden ist, in der ein optimaler Gang der Übertragung, der entsprechend eines Fahrzustands des Kraftfahrzeugs gewünscht ist, von einem durch einen Fahrer gewählten Gang verschieden ist, eine Gangschaltungsanzeige an den Fahrer durchführt, um so den Fahrer dazu anzuregen, in den optimalen Gang zu schalten, wobei die Kraftfahrzeuggangschaltungsanzeigevorrichtung aufweist:
eine Verbrennungsmotorlasterfassungseinrichtung, die eine Verbrennungsmotorlast erfasst;
eine Gangschaltungsanzeigeverzögerungseinrichtung, die, nachdem die Gangschaltungsanzeigebedingung hergestellt worden ist, die Gangschaltungsanzeige an den Fahrer für eine vorherbestimmte Zeit verzögert;
eine Verzögerungszeitänderungseinrichtung, die eine Ausgabe von der Verbrennungsmotorlasterfassungseinrichtung empfängt und die Verzögerungszeit mittels der Gangschaltungsanzeigeverzögerungseinrichtung entsprechend der Größe der Verbrennungsmotorlast ändert; **gekennzeichnet durch**
einen Lampenausschalttimer, der ein Zählen startet, wenn der Fahrer eine Gangschaltungsbedienung gemäß der Gangschaltungsanzeige durchgeführt hat und **dadurch** die Gangschaltungsanzeige ausgelöst worden ist; und
einen Gangschaltungsanzeigezulassungstimer, der ein Zählen mit einem Herstellen einer Gangschaltungsanzeigebedingung und einem Verstreichen einer von dem Lampenausschalttimer gezählten Zeit als eine UND-Bedingung startet, wobei eine Gangschaltungsanzeige an den Fahrer durchgeführt wird, wenn die von dem Gangschaltungsanzeigezulassungstimer gezählte Zeit verstrichen ist,
wobei die Verzögerungszeitänderungseinrichtung eine Zeit von, wenn der Gangschaltungsanzeigezulassungstimer das Zählen beginnt, bis, wenn die von dem Gangschaltungsanzeigezulassungstimer gezählte Zeit verstreicht, zu einer kürzeren Zeit für eine größere Verbrennungsmotorlast festsetzt.

2. Kraftfahrzeuggangschaltungsanzeigevorrichtung nach Anspruch 1,
wobei die Verbrennungsmotorlasterfassungseinrichtung die Verbrennungsmotorlast von einem Gaspedalöffnungswinkel des Kraftfahrzeugs erhält.

3. Kraftfahrzeuggangschaltungsanzeigevorrichtung nach Anspruch 1,
wobei die Verbrennungsmotorlasterfassungseinrichtung die Verbrennungsmotorlast von dem Grad der Kraftfahrzeugsbeschleunigung erhält.

## Revendications

1. Appareil d'indication de changement de vitesse d'automobile qui est utilisé dans une automobile équipée d'une boîte de vitesses capable d'être actionnée manuellement, et, quand une condition d'indication de changement de vitesse a été établie, dans laquelle une vitesse optimum de la boîte de vitesses désirée selon un état de conduite de l'automobile est différente d'une vitesse choisie par un conducteur, qui exécute une indication de changement de vitesse au conducteur de façon à suggérer au conducteur de changer de vitesse pour la vitesse optimum, cet appareil d'indication de changement de vitesse d'automobile comprenant :
un moyen de détection de charge du moteur qui détecte une charge du moteur ;
un moyen de retard d'indication de changement de vitesse qui, après que la condition d'indication de changement de vitesse a été établie, retarde l'indication du changement de vitesse au conducteur pendant un temps prédéterminé ;
un moyen de changement du temps de retard qui reçoit une sortie du moyen de détection de charge du moteur, et qui change le temps de retard par le moyen de retard d'indication de changement de vitesse selon la taille de la charge du moteur ;
**caractérisé par**
un chronomètre d'extinction de voyant qui commence un compte quand le conducteur a exécuté une opération de changement de vitesse conformément à l'indication de changement de vitesse et que l'indication de changement de vitesse a donc été relâchée ; et
un chronomètre de permission d'indication de changement de vitesse qui commence un compte avec l'établissement d'une condition d'indication de changement de vitesse et l'écoulement du temps compté par le chronomètre d'extinction de voyant comme condition ET, l'indication de changement de vitesse au conducteur étant exécutée lorsque le temps compté par le chronomètre de permission d'indication de changement de vitesse s'est écoulé,
dans lequel le moyen de changement du temps de retard règle un temps, qui s'écoule à partir du moment auquel le chronomètre de permission d'indication de changement de vitesse commence le compte jusqu'au moment auquel le temps compté par le chronomètre de permission d'indication de changement de vitesse s'est écoulé, à un temps plus court pour une charge du moteur plus grande.

2. Appareil d'indication de changement de vitesse d'automobile selon la revendication 1,
dans lequel le moyen de détection de charge du moteur obtient la charge du moteur à partir d'un degré d'ouverture de l'accélérateur de l'automobile.

3. Appareil d'indication de changement de vitesse d'automobile selon la revendication 1,
dans lequel le moyen de détection de charge du moteur obtient la charge du moteur à partir du degré d'accélération de l'automobile.
